# EUROPEAN PATENT APPLICATION

(11) **EP 4 108 491 A1**
(43) Date of publication of application: **28.12.2022**
(21) Application number: 22170159.2
(22) Date of filing: 27.04.2022
(51) Int. Cl.: B60K 1/04, B62D 25/08, B62D 21/07

(54) **VEHICLE FRONT PORTION STRUCTURE**

(30) Priority: 22.06.2021 JP 2021103559
(71) Applicant: TOYOTA JIDOSHA KABUSHIKI KAISHA, Toyota-shi, Aichi-ken, 471-8571 (JP)
(72) Inventor: HARA, Yasuhiro, TOYOTA-SHI, AICHI-KEN, 471-8571 (JP); KOREISHI, Norimasa, TOYOTA-SHI, AICHI-KEN, 471-8571 (JP); WATANABE, Jumpei, TOYOTA-SHI, AICHI-KEN, 471-8571 (JP); ISHIOKA, Hirotaka, TOYOTA-SHI, AICHI-KEN, 471-8571 (JP)
(74) Representative: Cabinet Beau de Loménie

(57) **Abstract**

A vehicle front portion structure includes: a battery (16) that is disposed under a floor of a vehicle (10) and between a left and right pair of frame portions (14), the left and right pair of frame portions defining a skeleton of the vehicle and being disposed with a space therebetween in a vehicle width direction; a power control unit (18) that is provided at a front portion of the vehicle and closer to a vehicle front side than the battery, and that is configured to control power to a motor; a support member (20) that is provided at the front portion of the vehicle and that is configured to support the power control unit; and a cable (22) that extends in a vehicle front-rear direction, through a space at an inner side, in the vehicle width direction, of the support member, and that connects the battery with the power control unit.

## Description

### BACKGROUND

### Technical Field

The present disclosure relates to a vehicle front portion structure.

### Related Art

Japanese Patent Application Laid-Open (JP-A) No. 2011-182608 discloses a vehicle that travels using a motor as a power source. In the vehicle described in this document, the motor is provided at a front portion of the vehicle, and a battery that stores power supplied to the motor is provided under the floor of the vehicle.

However, in a configuration in which power is supplied between a battery and a motor via a cable, it is important to protect the cable at the time of a vehicle collision, such as a frontal collision or a side-impact collision of the vehicle, and there is room for improvement in the configuration described in JP-A No. 2011-182608.

### SUMMARY

In consideration of the above circumstances, an object of the present disclosure is to obtain a vehicle front portion structure that is capable of protecting a cable in a vehicle collision.

A vehicle front portion structure of a first aspect includes: a battery that is disposed under a floor of a vehicle and between a left and right pair of frame portions, the left and right pair of frame portions that define a skeleton of the vehicle and being disposed with a space therebetween in a vehicle width direction; a power control unit that is provided at a front portion of the vehicle and closer to a vehicle front side than the battery, and that is configured to control power to a motor; a support member that is provided at the front portion of the vehicle and that is configured to support the power control unit; and a cable that extends in a vehicle front-rear direction, through a space at an inner side, in the vehicle width direction, of the support member, and that connects the battery with the power control unit.

According to the vehicle front portion structure of the first aspect, the battery and the power control unit are connected to each other via a cable. This enables power stored in the battery to be supplied to the motor via the cable and the power control unit. Further, the cable extends in the vehicle front-rear direction, through a space at the vehicle width direction inner side of the support member. This enables the cable to be protected by the support member when the vehicle is deformed due to a vehicle collision.

The vehicle front portion structure of the second aspect is the vehicle front portion structure of the first aspect, wherein, in a vehicle side view, at least a portion of the cable is disposed so as to overlap with the frame portions in the vehicle width direction.

According to the vehicle front portion structure of the second aspect, the cable can be protected by the frame portions in a side-impact collision of the vehicle, due to at least a portion of the cable being disposed so as to overlap with the frame portions in the vehicle width direction, in a vehicle side view.

The vehicle front portion structure of the third aspect is the vehicle front portion structure of the first aspect, wherein the support member includes: a front and rear pair of cross member portions that respectively extend in the vehicle width direction between the left and right pair of frame portions, and that are disposed with a space therebetween in the vehicle front-rear direction; and a left and right pair of coupling portions that respectively extend in the vehicle front-rear direction between the front and rear pair of cross member portions, and that are disposed with a space therebetween in the vehicle width direction.

According to the vehicle front portion structure of the third aspect, the support member includes a front and rear pair of cross member portions and a left and right pair of coupling portions. Therefore, for example, when a collision load due to a frontal collision has been input to the cross member portion at the vehicle front side, a part of the collision load can be transferred from the cross member portion at the vehicle front side to the left and right pair of frame portions. Further, another part of the collision load can be transferred from the cross member portion at the vehicle front side to the left and right pair of frame portions via the left and right pair of coupling portions and the cross member portion at the vehicle rear side.

The vehicle front portion structure of the fourth aspect is the vehicle front portion structure of the third aspect, wherein: of the front and rear pair of cross member portions, a cross member portion that is disposed at a vehicle rear side includes a left-right direction extending portion that extends in the vehicle width direction, and a left and right pair of inclined extending portions that respectively extend from one end portion and another end portion, in the vehicle width direction, of the left-right direction extending portion, toward the vehicle front side; and a connection portion of the power control unit and the cable is disposed at a same side as the left-right direction extending portion.

According to the vehicle front portion structure of the fourth aspect, the cross member portion disposed at the vehicle rear side includes a left-right direction extending portion, and a left and right pair of inclined extending portions. Further, a connection portion of the power control unit and the cable is disposed at the left-right direction extending portion side. In such a configuration, for example, even if a collision load due to a side-impact collision of the vehicle is transferred to the cross member portion disposed at the vehicle rear side, and the inclined extending portions are deformed toward the vehicle width direction inner side, it is possible to suppress the deformed inclined extending portions from contacting the cable.

The vehicle front portion structure of the fifth aspect is the vehicle front portion structure of the first aspect, wherein: the power control unit includes a power control unit side connection portion to which the cable connects; and the power control unit side connection portion is angled toward the battery and obliquely toward a vehicle lower side.

According to the vehicle front portion structure of the fifth aspect, the power control unit side connection portion is angled toward the battery side and obliquely toward the vehicle lower side. This enables workability to be improved when, for example, connecting the cable to the power control unit side connection portion or detaching the cable from the power control unit side connection portion in a state in which the vehicle is lifted up.

The vehicle front portion structure according to the present disclosure has the excellent effect of being able to protect the cable at the time of a vehicle collision.

### BRIEF DESCRIPTION OF THE DRAWINGS

An exemplary embodiments of the present invention will be described in detail based on the following figures, wherein:
Fig. 1 is a plan view showing a vehicle frame and the like of the present embodiment;
Fig. 2 is a side view showing a vehicle frame and the like of the present embodiment;
Fig. 3 is a side cross-section view taken along line 3-3 in Fig. 1, showing a frame and the like;
Fig. 4 is a plan view showing a vehicle front portion of the present embodiment; and
Fig. 5 is a perspective view of a vehicle front portion of the present embodiment, as seen obliquely from a vehicle lower side.

### DETAILED DESCRIPTION

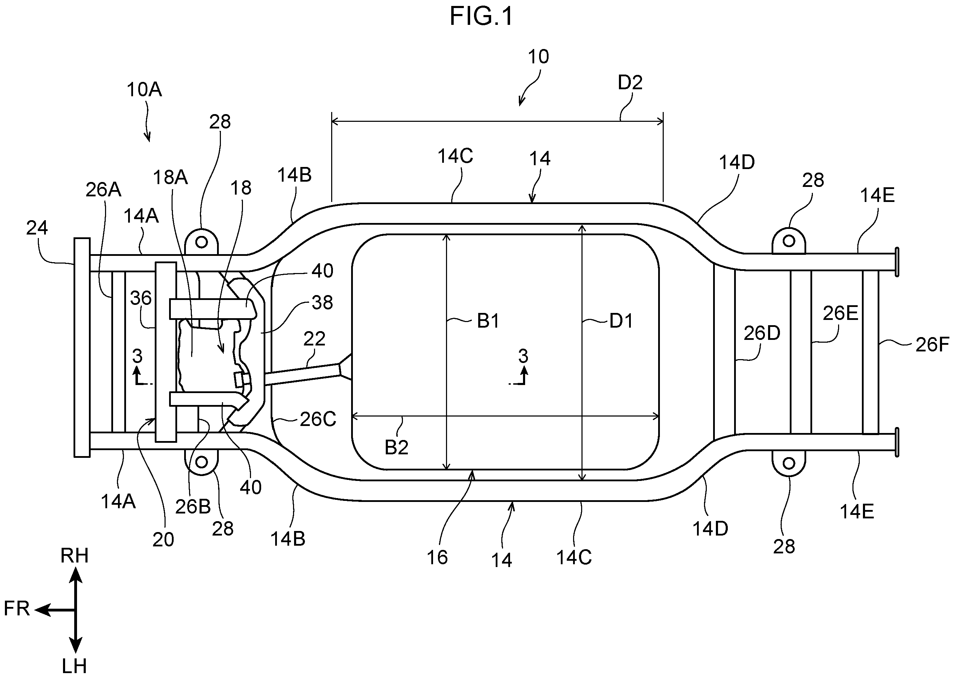

Explanation follows regarding a vehicle to which a vehicle front portion structure according to an embodiment of the present disclosure is applied, with reference to Fig. 1 to Fig. 5. Note that in the following explanation, reference to the front-rear, left-right, and up-down directions refers to the front-rear, left-right, and up-down directions of a vehicle. Further, in each of the drawings, as appropriate, the arrow FR indicates the front direction, the arrow UP indicates the up direction, the arrow LH indicates the left direction, and the arrow RH indicates the right direction. Furthermore, the right direction and the left direction are consistent with the vehicle width direction, with the vehicle width direction inner side indicating the center in the vehicle width direction, and a vehicle width direction outer side indicating a side opposite to the center in the vehicle width direction.

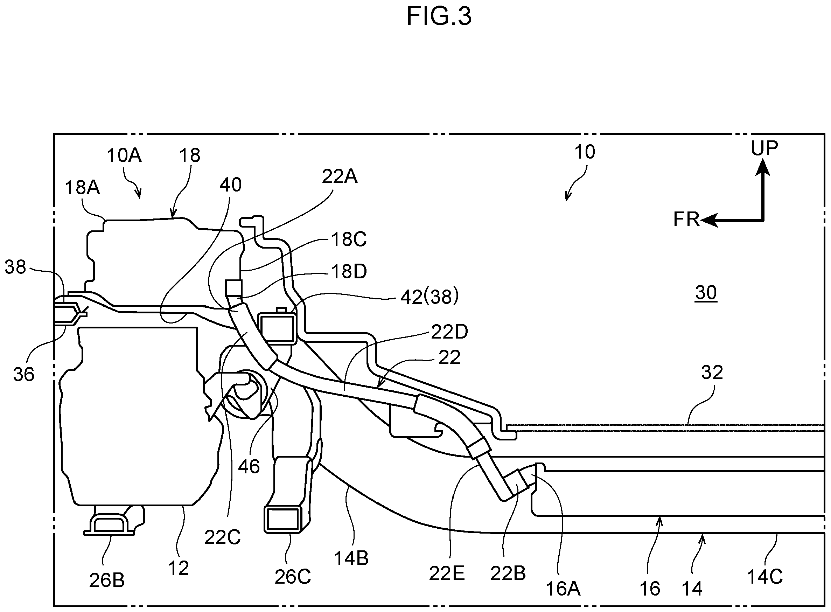

As shown in Fig. 1, Fig. 2, and Fig. 3, a vehicle 10 to which a vehicle front portion structure of the present embodiment is applied is an electric vehicle that is driven by a motor 12 (see Fig. 3). The vehicle 10 includes a left and right pair of frame portions 14 defining the main part of the skeleton of the vehicle 10, and a battery 16 that is disposed under the floor of the vehicle 10 between the left and right pair of frame portions 14. Further, the vehicle 10 includes a power control unit 18 that controls power and the like to the motor 12, a support member 20 that supports the power control unit 18, and a cable 22 that electrically connects the battery 16 with the power control unit 18.

As shown in Fig. 1, the left and right pair of frame portions 14 are disposed with a space therebetween, in the vehicle width direction, and are formed with a rectangular cross-section in a cross-section taken along the up-down direction and the vehicle width direction. The left frame portion 14 and the right frame portion 14 are formed symmetrically in the left-right direction. Specifically, each of the left and right pair of frame portions 14 includes a first extending portion 14A extending in the front-rear direction in a front portion 10A of the vehicle 10, and a second extending portion 14B extending downward and toward a vehicle width direction outer side from a rear end of the first extending portion 14A toward the rear side. Further, each of the left and right pair of frame portions 14 includes a third extending portion 14C extending toward the rear side from a rear end of the second extending portion 14B, and a fourth extending portion 14D extending upward and toward the vehicle width direction inner side from a rear end of the third extending portion 14C toward the rear side. In addition, each of the left and right pair of frame portions 14 includes a fifth extending portion 14E extending toward the rear side from a rear end of the fourth extending portion 14D.

A front bumper reinforcement 24 is joined to a front end of each of the first extending portions 14A of the left and right pair of frame portions 14. Further, plural lower cross member portions 26A, 26B, and 26C are joined to the lower sides of the respective first extending portions 14A of the left and right pair of frame portions 14 in a state extending in the left-right direction. The plural lower cross member portions 26A, 26B, and 26C are referred to as a first lower cross member portion 26A, a second lower cross member portion 26B, and a third lower cross member portion 26C in order from the front side. The second lower cross member portion 26B and the third lower cross member portion 26C each has a function as a suspension member at which a lower arm, not shown in the drawings, or the like is supported. Further, a portion of the motor 12 is supported via a mount member, not shown in the drawings, at the second lower cross member portion 26B. In addition, a coilover fixing portion 28 to which an upper end portion of a coilover, not shown in the drawings, is fixed, is joined to the vehicle width direction outer side of each of the first extending portions 14A of the left and right pair of frame portions 14.

Further, plural lower cross member portions 26D, 26E, and 26F are joined to the lower sides of the respective fifth extending portions 14E of the left and right pair of frame portions 14 in a state extending in the left-right direction. The plural lower cross member portions 26D, 26E, and 26F are referred to as a fourth lower cross member portion 26D, a fifth lower cross member portion 26E, and a sixth lower cross member portion 26F in order from the front side. Further, a coilover fixing portion 28 to which an upper end portion of a coilover, not shown in the drawings, is fixed, is joined to the vehicle width direction outer side of each of the fifth extending portions 14E of the left and right pair of frame portions 14.

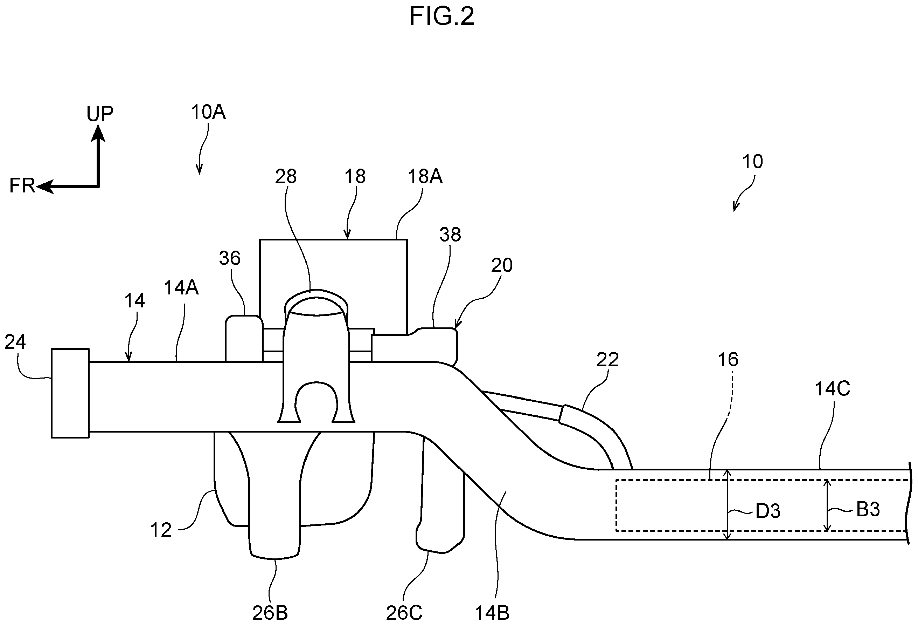

As shown in Fig. 1 and Fig. 2, the battery 16, which is provided under the floor of the vehicle 10, is formed in a rectangular parallelepiped shape, and is disposed at the center in the left-right direction between the respective third extending portions 14C of the left and right pair of frame portions 14. A dimension B 1 of the battery 16 in the left-right direction is smaller than a space D1 in the left-right direction between the respective third extending portions 14C of the left and right pair of frame portions 14. A dimension B2 of the battery 16 in the front-rear direction is smaller than a dimension D2 in the front-rear direction of the respective third extending portions 14C of the left and right pair of frame portions 14. A dimension B3 of the battery 16 in the up-down direction is smaller than a dimension D3 in the up-down direction of the respective third extending portions 14 C of the left and right pair of frame portions 14. As shown in Fig. 3, a battery side connection portion 16A, to which a cable 22 is connected, is provided at a vehicle width direction center portion of a front end portion of the battery 16. The battery side connection portion 16A protrudes out from the front end portion of the battery 16 toward the front side and obliquely toward the lower side. A protruding direction of the battery side connection portion 16A from the front end portion of the battery 16 is toward the third lower cross member portion 26C and obliquely toward the vehicle lower side. As shown in Fig. 3, a floor panel 32 defining a floor surface of the vehicle interior 30 of the vehicle 10 is provided above the respective third extending portions 14C of the left and right pair of frame portions 14. Note that under the floor of the vehicle 10 refers to a space below the floor panel 32.

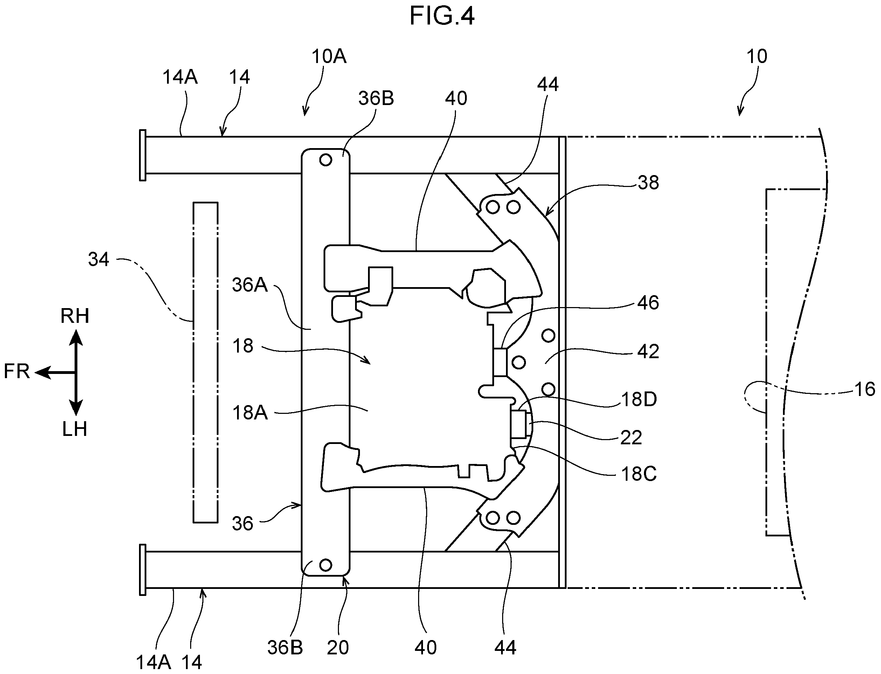

As shown in Fig. 2 and Fig. 3, the power control unit 18 is a unit that supplies power stored in the battery 16 to the motor 12, or that is operated in order to store, in the battery 16, kinetic energy of the vehicle 10 collected by the motor 12. The power control unit 18 includes a housing 18A formed in a box shape. A control circuit that controls current and the like flowing between the battery 16 and the motor 12 is provided inside the housing 18A. Further, a flow path through which cooling water flows in order to cool the control circuit is provided inside the housing 18A. As shown in Fig. 4, a connection pipe, not shown in the drawings, into which or out of which cooling water flows is provided at a front portion of the housing 18A. A hose, not shown in the drawings, is connected to the connection pipe, and the hose is connected to a radiator 34 provided at the front side of the power control unit 18 and the motor 12. Note that a lower end portion of the radiator 34 is supported by the first lower cross member portion 26A (see Fig. 1).

A power control unit side connection portion 18D, to which the cable 22 is connected, is provided at a rear portion 18C of the housing 18A. The power control unit side connection portion 18D protrudes out downward and obliquely toward the rear side, from a lower end side of the rear portion 18C of the housing 18A. A protruding direction of the power control unit side connection portion 18D from the rear portion 18C of the housing 18A is toward the battery 16 side and obliquely toward the vehicle lower side.

As shown in Fig. 4, a support member 20 is formed in a ladder shape in a vehicle plan view. The support member 20 includes a front and rear pair of cross member portions 36, 38 that respectively extend in the vehicle width direction between the left and right pair of frame portions 14, and that are disposed with a space therebetween, in the front-rear direction. Further, the support member 20 includes a left and right pair of coupling portions 40 that respectively extend in the vehicle front-rear direction between the front and rear pair of cross member portions 36, 38, and that are disposed with a space therebetween, in the vehicle width direction.

Here, of the front and rear pair of cross member portions 36, 38, a front-side cross member portion 36 is referred to as the front-side cross member portion 36, and a rear-side cross member portion 38 is referred to as the rear-side cross member portion 38.

The front-side cross member portion 36 is formed in a rectangular shape extending linearly in the vehicle width direction in a vehicle plan view. A cross section of the front-side cross member portion 36 taken along the front-rear direction and the up-down direction is a rectangular shape. Further, a vehicle width direction center portion 36A of the front-side cross member portion 36 is configured projecting upward with respect to both vehicle width direction side portions 36B. Both vehicle width direction side portions 36B of the front-side cross member portion 36 are joined to the upper sides of the respective first extending portions 14A of the left and right pair of frame portions 14.

The rear-side cross member portion 38 is formed in a shape that is curved such that the vehicle front side thereof is concave in a vehicle plan view. A cross section of the rear-side cross member portion 38 taken along the front-rear direction and the up-down direction is a rectangular shape. Further, the rear-side cross member portion 38 includes a left-right direction extending portion 42 extending in the vehicle width direction, and a left and right pair of inclined extending portions 44 that respectively extend from one end portion and another end portion, in the vehicle width direction, of the left-right direction extending portion 42, toward the vehicle front side and lower side. Note that in the present embodiment, although there is a divided structure in which the left-right direction extending portion 42 and the left and right pair of inclined extending portions 44 are joined together via fastening members, the left-right direction extending portion 42 and the left and right pair of inclined extending portions 44 may be integrally configured. End portions at the vehicle width direction outer sides of the left and right pair of inclined extending portions 44 are joined to the vehicle width direction inner side of respective first extending portions 14A of the left and right pair of frame portions 14.

The left and right pair of coupling portions 40 are formed in a rectangular shape extending linearly in the front-rear direction in a vehicle plan view. A cross section of the coupling portions 40 taken along the left-right direction and the up-down direction is a rectangular shape. Front end portions of the left and right pair of coupling portions 40 are respectively joined to vehicle width direction sides of the vehicle width direction center portion 36A of the front-side cross member portion 36. Rear end portions of the left and right pair of coupling portions 40 are respectively joined to vehicle width direction sides of the left-right direction extending portion 42 of the rear-side cross member portion 38.

Further, the housing 18A of the above-described power control unit 18 is fixed to the left and right pair of coupling portions 40 via fastening members or the like, in a state mounted on the front and rear pair of cross member portions 36, 38 and the left and right pair of coupling portions 40. As a result, the power control unit 18 is supported by the support member 20, and the power control unit 18 is supported by the left and right pair of frame portions 14 via the support member 20. Further, as shown in Fig. 3, in a state in which the power control unit 18 is supported by the support member 20, the power control unit side connection portion 18D is disposed adjacent to the left-right direction extending portion 42 in the front-rear direction, at the left-right direction extending portion 42 side. Note that a portion of the motor 12 is supported by the rear-side cross member portion 38 of the support member 20 via the mount member 46.

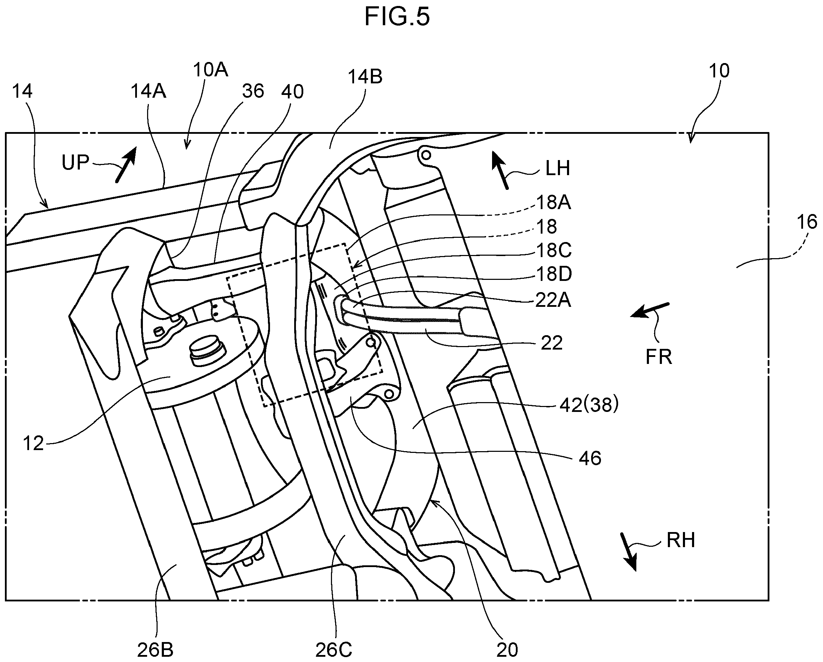

As shown in Fig. 3 and Fig. 5, the cable 22 is a high-voltage cable compatible with a current flowing between the motor 12 and the power control unit 18, and extends in the front-rear direction between the motor 12 and the power control unit 18. One end of the cable 22 is a front-side connection portion 22A. The front-side connection portion 22A is connected to the power control unit side connection portion 18D of the power control unit 18. Further, another end of the cable 22 is a rear-side connection portion 22B. The rear-side connection portion 22B is connected to the battery side connection portion 16A of the battery 16.

Further, a front-side portion 22C of the cable 22 is disposed through a space at the vehicle width direction inner side of the support member 20. More specifically, as shown in Fig. 3, Fig. 4, and Fig. 5, the front-side portion 22C of the cable 22 is disposed in a position tilting rearward toward a lower side through a space surrounded by the front and rear pair of cross member portions 36, 38 and the left and right pair of coupling portions 40 of the support member 20. Further, an intermediate portion 22D in the front-rear direction of the cable 22 extends from a lower side of the rear-side cross member portion 38 of the support member 20 toward a rear side. In addition, a rear-side portion 22E of the cable 22 is disposed in a position tilting rearward toward a lower side. Further, in the present embodiment, in a vehicle side view, the front-side portion 22C of the cable 22 and a front-side of the intermediate portion 22D in the front-rear direction of the cable 22 are disposed so as to overlap with the second extending portions 14B of the frame portions 14 in the vehicle width direction.

### Operation and Effects of the Present Embodiment

Explanation follows regarding the operation and effects of the present embodiment.

As shown in Fig. 3, Fig. 4, and Fig. 5, in the vehicle 10 to which the vehicle front portion structure of the present embodiment explained above is applied, the battery 16 and the power control unit 18 are connected to each other via a cable 22. This enables power stored in the battery 16 to be supplied to the motor 12 via the cable 22 and the power control unit 18.

Here, in the present embodiment, the front-side portion 22C of the cable 22 is disposed through a space surrounded by the front and rear pair of cross member portions 36, 38 and the left and right pair of coupling portions 40 of the support member 20. This enables the cable 22 to be protected by the support member 20 when the vehicle 10 is deformed due to a collision of the vehicle 10.

Further, in the present embodiment, in a vehicle side view, the front-side portion 22C of the cable 22 and the front-side portion of the intermediate portion 22D in the front-rear direction of the cable 22 are disposed so as to overlap with the second extending portions 14B of the frame portions 14 in the vehicle width direction. This enables the portions of the cable 22 that are disposed so as to overlap with the frame portions 14 in the vehicle width direction to be protected by the frame portions 14 at the time of a side-impact collision of the vehicle 10.

In addition, in the present embodiment, the support member 20 includes the front-side cross member portion 36 and the rear-side cross member portion 38 which respectively extend in the vehicle width direction between the left and right pair of frame portions 14 and which are disposed with a space therebetween, in the front-rear direction, and the left and right pair of coupling portions 40 that respectively extend in the vehicle front-rear direction between the front-side cross member portion 36 and the rear-side cross member portion 38 and which are disposed with a space therebetween, in the vehicle width direction. This enables a part of a collision load to be transferred from the front-side cross member portion 36 to the left and right pair of frame portions 14 when a collision load due to a frontal collision has been input to the front-side cross member portion 36. Further, another part of the collision load can be transferred from the front-side cross member portion 36 to the left and right pair of frame portions 14 via the left and right pair of coupling portions 40 and the rear-side cross member portion 38.

Furthermore, in the present embodiment, the rear-side cross member portion 38 includes the left-right direction extending portion 42 extending in the vehicle width direction, and the left and right pair of inclined extending portions 44 that respectively extend from one end portion and another end portion, in the vehicle width direction, of the left-right direction extending portion 42, toward the vehicle front side and lower side. In addition, a connection portion of the power control unit 18 and the cable 22 is disposed adjacent to the left-right direction extending portion 42 in the front-rear direction. By providing such a configuration, even if a collision load due a side-impact collision of the vehicle 10 is transferred to the rear-side cross member 38 and the inclined extending portions 44 deform to the vehicle width direction inner side, it is possible to suppress the deformed inclined extending portions 44 from contacting the cable 22.

Further, in the present embodiment, the protruding direction of the power control unit side connection portion 18D of the power control unit 18 is angled toward the battery 16 side and obliquely toward the vehicle lower side. This enables workability to be improved when connecting the front-side connection portion 22A of the cable 22 to the power control unit side connection portion 18D or detaching the front-side connection portion 22A of the cable 22 from the power control unit side connection portion 18D, in a state in which the vehicle 10 is lifted up.

Note that in the present embodiment, although an example has been explained in which the protruding direction of the power control unit side connection portion 18D of the power control unit 18 is angled toward the battery 16 side and obliquely toward the vehicle lower side, the present disclosure is not limited thereto. The orientation of the power control unit side connection portion 18D of the power control unit 18 may be appropriately set based on an assembly process and maintenance procedures of the vehicle 10, the configuration in the vicinity of the power control unit 18, and the like.

Further, in the present embodiment, although a configuration has been explained in which the rear-side cross member portion 38 includes the left-right direction extending portion 42 extending in the vehicle width direction, and the left and right pair of inclined extending portions 44 that respectively extend from one end portion and another end portion, in the vehicle width direction, of the left-right direction extending portion 42, toward the vehicle front side and lower side, the present disclosure is not limited thereto. The configuration of the rear-side cross member portion 38 may be appropriately set taking into consideration the path along which the cable 22 is disposed and the like.

Further, in the present embodiment, although an example has been explained in which the support member includes the front-side cross member portion 36 and the rear-side cross member portion 38, and the left and right pair of coupling portions 40 that respectively extend in the vehicle front-rear direction between the front-side cross member portion 36 and the rear-side cross member portion 38, the present disclosure is not limited thereto. The configuration of the support member 20 may be appropriately set taking into consideration the shape of the housing 18A of the power control unit 18, the rigidity required of the support member 20, and the like.

Further, in the present embodiment, although an example has been explained in which, in a vehicle side view, the front-side portion 22C of the cable 22 and the front-side portion of the intermediate portion 22D in the front-rear direction of the cable 22 are disposed so as to overlap with the second extending portion 14B of the frame portions 14 in the vehicle width direction, the present disclosure is not limited thereto. For example, the entire cable 22 may be disposed so as to overlap with the frame portions 14 in the vehicle width direction. Further, in a case in which other configurations are applied that protect the cable 22 at the time of a side-impact collision, the entire cable 22 may be disposed so as not to overlap with the frame portions 14 in the vehicle width direction.

Although an embodiment of the present disclosure has been explained above, the present disclosure is not limited to the above, and it is obvious that various modifications other than the above can be practiced without departing from the scope of the invention.

## Claims

1. A vehicle front portion structure, comprising:
a battery (16) that is disposed under a floor of a vehicle (10) and between a left and right pair of frame portions (14), the left and right pair of frame portions defining a skeleton of the vehicle and being disposed with a space therebetween in a vehicle width direction;
a power control unit (18) that is provided at a front portion of the vehicle and closer to a vehicle front side than the battery, and that is configured to control power to a motor;
a support member (20) that is provided at the front portion of the vehicle and that is configured to support the power control unit; and
a cable (22) that extends in a vehicle front-rear direction, through a space at an inner side, in the vehicle width direction, of the support member, and that connects the battery with the power control unit.

2. The vehicle front portion structure according to claim 1, wherein, in a vehicle side view, at least a portion of the cable (22) is disposed so as to overlap with the frame portions (14) in the vehicle width direction.

3. The vehicle front portion structure according to claim 1 or claim 2, wherein the support member (20) includes:
a front and rear pair of cross member (36,38) portions that respectively extend in the vehicle width direction between the left and right pair of frame portions (14), and that are disposed with a space therebetween in the vehicle front-rear direction; and
a left and right pair of coupling portions (40) that respectively extend in the vehicle front-rear direction between the front and rear pair of cross member portions, and that are disposed with a space therebetween in the vehicle width direction.

4. The vehicle front portion structure according to claim 3, wherein:
of the front and rear pair of cross member portions (36, 38), a cross member portion (38) that is disposed at a vehicle rear side includes a left-right direction extending portion (42) that extends in the vehicle width direction, and a left and right pair of inclined extending portions (44) that respectively extend from one end portion and another end portion, in the vehicle width direction, of the left-right direction extending portion, toward the vehicle front side; and
a connection portion of the power control unit and the cable is disposed at a same side as the left-right direction extending portion.

5. The vehicle front portion structure according to any one of claims 1 to 4 wherein:
the power control unit (18) comprises a power control unit side connection portion (18D) to which the cable connects; and
the power control unit side connection portion is angled toward the battery and obliquely toward a vehicle lower side.
